# EUROPEAN PATENT APPLICATION

(11) **EP 4 407 739 A1**
(43) Date of publication of application: **31.07.2024**
(21) Application number: 23873049.3
(22) Date of filing: 26.09.2023
(51) Int. Cl.: H01M 10/0587, H01M 10/42, C09J 7/38, C09J 7/25, H01M 10/052, H01M 10/0569, H01M 10/0568

(54) **JELLY-ROLL TYPE ELECTRODE ASSEMBLY, MANUFACTURING METHOD FOR JELLY-ROLL TYPE ELECTRODE ASSEMBLY, AND SECONDARY BATTERY COMPRISING SAME**

(30) Priority: 26.09.2022 KR 20220121663; 25.09.2023 KR 20230127959
(71) Applicant: LG Energy Solution, Ltd., Seoul 07335 (KR)
(72) Inventor: KOO, Seongmo, Daejeon 34122 (KR); KIM, Young Soo, Daejeon 34122 (KR); LEE, Kwan Soo, Daejeon 34122 (KR); LEE, Byeongjoon, Daejeon 34122 (KR)
(74) Representative: Goddar, Heinz J.
(86) International application number: PCT/KR2023/014720
(87) International publication number: WO 2024/071934

(57) **Abstract**

Disclosed are a jelly-roll type electrode assembly, a method for manufacturing a jelly-roll type electrode assembly, and a secondary battery including the same.

## Description

### [Technical Field]

The present invention relates to a jelly-roll type electrode assembly, a method for manufacturing a jelly-roll type electrode assembly, and a secondary battery including the same, and more particularly, to a jelly-roll type electrode assembly including a swelling tape, a method for manufacturing a jelly-roll type electrode assembly, and a cylindrical secondary battery including the same.

The present application claims priority to and the benefit of Korean Patent Application No. 10-2022-0121663 filed with the Korean Intellectual Property Office on September 26, 2022, the entire contents of which are incorporated herein by reference.

### [Background Art]

For a cylindrical battery, a jelly-roll type electrode assembly is manufactured by rolling a long electrode having a prescribed width into a roll form. In a cylindrical battery manufactured by inserting such a jelly-roll type electrode assembly into a battery case, contraction/expansion of the electrode repeatedly occurs during charging and discharging. In particular, when a degree of contraction/expansion of the electrode assembly increases due to a tab (in tab) located in a core of the jelly-roll type electrode assembly or a silicon-based active material added in a negative electrode, a pressure acting on a core portion of the electrode assembly greatly increases.

As low-resistance/high-capacity designs have been improving, traditional jelly-roll type electrode assemblies have been including a plurality of tabs or a silicon-based active material. Accordingly, there is an increased possibility of deformation of the electrode assembly around the core portion due to contraction/expansion of the electrode assembly. In particular, when a separator located between the negative electrode and the positive electrode is damaged, the negative electrode and the positive electrode directly contact each other, causing heat generation and potential ignition due to an internal short.

In order to prevent separator damage and internal shorts caused by deformation of the electrode assembly, it is necessary to develop a technology capable of protecting the positive electrode and separator and preventing internal shorts.

### [Detailed Description of the Invention]

### [Technical Problem]

The present disclosure is directed to a jelly-roll type electrode assembly with an improved design, a method for manufacturing a jelly-roll type electrode assembly, and a secondary battery including the same.

However, the problem to be solved by the present disclosure is not limited to the above-mentioned problems, and other problems not mentioned will be apparently understood by one skilled in the art from the following description.

### [Technical Solution]

An exemplary embodiment of the present disclosure provides a jelly-roll type electrode assembly in which a first electrode, a first separator, a second electrode, and a second separator are sequentially stacked and wound, wherein the jelly-roll type electrode assembly includes a swelling tape attached on at least one surface of the first electrode, wherein the first electrode includes a first end portion from which winding begins along a longitudinal direction and a second end portion at which the winding ends, and wherein the swelling tape is attached such that one end portion matches the first end portion of the first electrode.

Another embodiment of the present disclosure provides a method for manufacturing a jelly-roll type electrode assembly in which a first electrode, a first separator, a second electrode, and a second separator are sequentially stacked and wound, the method including: (a) transferring the first electrode in a roll-to-roll manner; (b) attaching a swelling tape on at least one surface of a slitting region included in the first electrode; and (c) slitting a longitudinal central portion of the slitting region of the first electrode, wherein in the (b) attaching, the swelling tape is attached such that a longitudinal central portion of the swelling tape matches the longitudinal central portion of the slitting region of the first electrode, and wherein in the (c) slitting, the longitudinal central portion of the slitting region is slit such that the first electrode is provided with a first end portion from which winding begins along a longitudinal direction and a second end portion at which the winding ends, and also provides a jelly-roll type electrode assembly manufactured by the method.

Another exemplary embodiment of the present disclosure provides a secondary battery including the jelly-roll type electrode assembly described above; and a battery case for accommodating the electrode assembly.

### [Advantageous Effects]

The jelly-roll type electrode assembly according to an exemplary embodiment of the present disclosure includes the swelling tape attached such that it expands and wraps around one longitudinal end portion of a positive electrode when impregnated with an electrolyte solution, thereby preventing a damage to the positive electrode and the separator from deformation of the electrode assembly due to contraction/expansion of the electrode during charging and discharging of the battery. In addition, even when the separator is damaged, the swelling tape can prevent an internal short between the positive electrode and the negative electrode to improve the stability and life characteristics of the battery.

The method for manufacturing a jelly-roll type electrode assembly according to an exemplary embodiment of the present disclosure enables the jelly-roll type electrode assembly, which includes the swelling tape attached such that it expands and wraps around one longitudinal end portion of a positive electrode when impregnated with an electrolyte solution, to be produced in a continuous process manner using an existing roll-to-roll process facility, making it possible to secure productivity and economic efficiency.

In addition, the secondary battery according to the present disclosure can prevent an internal short between the positive electrode and the negative electrode even when the electrode assembly deforms due to contraction/expansion of the electrode during charging and discharging of the battery, thereby improving the stability and lifespan of the battery.

The effects of the present disclosure are not limited to the foregoing effects, and effects not mentioned will be apparently understood by one skilled in the art from the present specification and accompanying drawings.

### BRIEF DESCRIPTION OF DRAWINGS

FIG. 1 is a cross-sectional view of a jelly-roll type electrode assembly including a swelling tape according to an exemplary embodiment of the present disclosure.
FIGS. 2a and 2b show schematic diagrams of a method for manufacturing a jelly-roll type electrode assembly including a swelling tape and a PET tape according to an exemplary embodiment of the present disclosure.
FIGS. 3a-3c are images showing an implemented example of a method for manufacturing a jelly-roll type electrode assembly according to an exemplary embodiment of the present invention.
FIG. 4 is a graph of swelling test results of a swelling tape included in a jelly-roll type electrode assembly according to an exemplary embodiment of the present invention.
FIGS. 5a and 5b are images of first end portions of first electrodes before and after activation within a jelly-roll type electrode assembly according to Example 1 and Comparative Example 1.
FIGS. 6a and 6b are images of first end portions of first electrodes before and after activation within a jelly-roll type electrode assembly according to Example 1 and Comparative Example 1.
FIGS. 7a and 7b are graphs illustrating changes in coulombic efficiency with respect to cycle progress and results of room temperature-voltage tracking evaluation over time for secondary batteries prepared in Example 1 and Comparative Example 2.
FIGS. 8a and 8b are an images of portions of separators facing first electrodes included in the secondary batteries prepared in Example 1 and Comparative Example 2.
FIG. 9 is a table showing results of roundness evaluation for secondary batteries prepared in Example 1 and Comparative Example 3.

### <Explanation of Reference Numerals and Symbols>

- 100:: first electrode
- 101:: first electrode current collector
- 102, 103:: first electrode active material layer
- 110:: first end portion of first electrode
- 20:: separator
- 30, 30':: swelling tape
- 40:: PET tape
- L:: length of swelling tape before expansion
- L':: length of swelling tape after expansion
- Lₛ:: expanded length of swelling tape
- S10, S10':: first electrode preparation process
- S11:: first electrode transferring step
- S11':: slitting step
- S11":: first electrode separating step
- S12:: swelling tape attaching step
- S12':: protective tape attaching step
- S13, S13':: slitting step
- S20:: supply process
- S30:: arrangement process
- S40:: lamination process
- S50:: winding process
- S60:: taping process
- S70:: inspection process
- TD:: width direction
- MD:: longitudinal direction

### [Best Mode]

When one part "includes," "comprises," or "has" one constituent element throughout the present specification, unless otherwise specifically described, this does not mean that another constituent element is excluded, but means that another constituent element may be further included.

Throughout the present specification, when a member is referred to as being "on" another member, the member can be in direct contact with another member or an intervening member may also be present.

An exemplary embodiment of the present invention provides a jelly-roll type electrode assembly in which a first electrode, a first separator, a second electrode, and a second separator are sequentially stacked and wound, wherein the jelly-roll type electrode assembly includes a swelling tape attached on at least one surface of the first electrode, wherein the first electrode includes a first end portion from which winding begins along a longitudinal direction and an opposing second end portion at which the winding ends, and wherein the swelling tape is attached such that one end portion matches the first end portion of the first electrode.

The jelly-roll type electrode assembly according to an exemplary embodiment of the present invention includes the swelling tape attached such that it expands and wraps around one end portion, in a longitudinal direction, of a positive electrode when impregnated in an electrolyte solution, thereby preventing damage to the positive electrode and the separator from deformation of the electrode assembly due to contraction/expansion of the electrode during charging and discharging of the battery. In addition, even when the separator is damaged, the swelling tape can prevent an internal short between the positive electrode and the negative electrode to improve the stability and lifespan of the battery.

According to an exemplary embodiment of the present invention, the jelly-roll type electrode assembly may include a swelling tape attached on at least one surface of the first electrode. Specifically, the swelling tape may be attached on one surface of the first electrode facing a winding axis or on a surface opposite to the one surface facing the winding axis, or on both surfaces of the first electrode.

As described below, the swelling tape may expand and increase in length when impregnated with an electrolyte solution. Thus, when the swelling tape is attached on one surface of the first electrode, the swelling tape wraps around one longitudinal end portion of the first electrode after expansion, which prevents direct contact between the first electrode and the second electrode facing each other via the separator even if the separator is damaged.

In the case where the swelling tape is attached on one surface of the first electrode facing the winding axis, the swelling tape can more efficiently prevent an internal short between the positive electrode and the negative electrode when the separator is damaged. In addition, in the case where the swelling tape is attached on both surfaces of the first electrode, after expansion, an end portion of the swelling tape contacts the end portion of the first electrode while wrapping around the end portion of the first electrode, so that the longitudinal end portion of the first electrode can be protected more effectively. Additionally, in the case where the swelling tape wraps around the longitudinal end portion of the first electrode after expansion, internal stress is relieve and roundness of a core portion is improved due to porous material characteristics of the swelling tape.

According to an exemplary embodiment of the present invention, the first electrode may include a first end portion from which winding begins along a longitudinal direction and a second end portion at which the winding ends. In other words, the first electrode may be oriented such that the winding begins from the first end portion and is performed toward the second end portion. That is, the first end portion may refer to one longitudinal end portion located in a core portion of the jelly-roll type electrode assembly after winding, and the second end portion may refer to one longitudinal end portion located at an outermost perimeter of the jelly-roll type electrode assembly after winding.

According to an exemplary embodiment of the present invention, the swelling tape may be attached such that one end portion corresponds to one longitudinal end portion of the first electrode. Specifically, the swelling tape may be attached such that one end portion corresponds to the first end portion of the first electrode. In other words, the swelling tape may be attached such that one end portion corresponds to one longitudinal end portion of the first electrode located in the core portion.

With this configuration, the swelling tape can prevent deformation of the electrode assembly due to contraction/expansion of the electrode during charging and discharging of the battery, especially damage to the separator due to sliding of the first end portion of the first electrode in the core portion. Specifically, after expansion, one end portion of the swelling tape wraps around the corresponding end portion of the first electrode, or the end portion of the swelling tape attached on both surfaces of the first end portion of the first electrode wraps around and comes into contact with the corresponding end portion of the first electrode. Thereby, the swelling tape can effectively serve to prevent an internal short between the positive electrode and the negative electrode even when the separator is damaged.

According to an exemplary embodiment of the present invention, a width of the swelling tape may be 60% or greater and 100% or less based on 100% of a width of the first electrode. Specifically, the width of the swelling tape may be 70% or greater and 100% or less, 80% or greater and 100% or less, 60% or greater and 90% or less, 60% or greater and 80% or less, 60% or greater and 70% or less, or 70% or greater and 90% or less based on 100% of the width of the first electrode. When the width of the swelling tape satisfies the ranges described above, the width of the swelling tape after expansion may correspond to the length of the first electrode, and one end portion of the swelling tape effectively wraps around one longitudinal end portion of the first electrode. Thereby, the swelling tape can more effectively prevent an internal short between the positive electrode and the negative electrode even if the separator is damaged.

If the width, of the swelling tape is below the ranges described above, the effect of protecting the first end portion of the first electrode is minimized, and one end portion of the first electrode may become exposed, which may cause damage to the separator. When the separator is damaged, an internal short may occur due to direct contact between the first electrode and the second electrode. On the other hand, if the width of the swelling tape exceeds the range described above, the manufacturing cost may increase due to the excessive material, and after expansion, one end portion of the swelling tape is overexposed, which may cause defects during an insertion process into a battery case, and local problems such as lithium precipitation due to formation of steps in an overlapping region of the swelling tape. Note that the preferred width of the swelling tape may be adjusted according to physical properties of the swelling tape, particularly a rate of change in length before/after expansion.

According to an exemplary embodiment of the present invention, a length of the swelling tape may be 250% or greater and 3500% or less based on 100% of a thickness of the first electrode. Specifically, the length of the swelling tape may be 300% or greater, 350% or greater, 400% or greater, 450% or greater, or 500% or greater based on 100% of the thickness of the first electrode, and the length of the swelling tape may be 3000% or less, 2500% or less, 2000% or less, or 1500% or less, preferably 1000% or less, 850% or less, or 700% or less based on 100% of the thickness of the first electrode.

When the length of the swelling tape satisfies the range described above, the length of the swelling tape after expansion may correspond to the thickness of the first electrode, and one end portion of the swelling tape effectively wraps around one longitudinal end portion of the first electrode. Thereby, the swelling tape can more effectively prevent an internal short between the positive electrode and the negative electrode even if the separator is damaged.

Specifically, the swelling tape may expand toward both sides by 40% or greater in the width and length directions, respectively, or may expand toward one side by 20% or greater. That is, when the length of the swelling tape attached on both surfaces of the first electrode is 250% or greater based on 100% of the thickness of the first electrode, a sum of the longitudinal lengths of the expanded swelling tape may correspond to the thickness of the first electrode, and one end portion of the swelling tape attached on both surfaces of the first electrode can contact with each other and effectively wrap around one longitudinal end portion of the first electrode.

In addition, when the length of the swelling tape is 500% or greater based on 100% of the thickness of the first electrode, even in the case where the swelling tape is attached only on one surface of the first electrode facing the winding axis, the length, in the longitudinal direction, of the expanded swelling tape may correspond to the thickness of the first electrode, and the swelling tape may prevent an internal short between the positive electrode and negative electrode when the separator is damaged.

On the other hand, if the length of the swelling tape is less than 250% based on 100% of the thickness of the first electrode, the swelling tape may not fully wrap around one end portion of the first electrode after expansion, and thus, a portion of one end portion of the first electrode may be exposed. Therefore, the effects of preventing damage to the separator and preventing an internal short between the positive electrode and negative electrode when the separator is damaged may lessen.

When the length of the swelling tape attached on both surfaces of the first electrode is 1000% or less based on 100% of the thickness of the first electrode, defects by an overlapping region of the swelling tape, which may be caused due to excessive exposure of one end portion of the swelling tape in the longitudinal direction of the first electrode, can be minimized.

In addition, when the length of the swelling tape is 700% or less based on 100% of the thickness of the first electrode, an inactive region that may be formed in a swelling tape attachment region can be adjusted to an appropriate level to achieve the aforementioned effects of preventing damage to the separator and preventing an internal short while minimizing the effects on electrochemical properties such as a capacity reduction rate of the battery including the swelling tape.

According to an exemplary embodiment of the present invention, the first end portion of the first electrode may be such that a current collector of the first electrode and an active material layer of the first electrode form the end portion at the same position. In other words, the first end portion of the first electrode may be of a free-edge shape. With this, an area of an unnecessary uncoated portion on the first electrode current collector can be reduced to lower costs, and a slitting process can be performed after forming an active material layer on an electrode, so that a roll-to-roll process including a slitting process and a winding process can be performed more efficiently. Throughout this disclosure, the phrase 'same position' means that the end portions in the longitudinal direction are the same, and may include a case where the end portions are formed at substantially the same positions due to a process error that may occur in the slitting process or other manufacturing process.

According to an exemplary embodiment of the present disclosure, the swelling tape may be expanded or become flexible when in contact with an electrolyte solution. Specifically, the swelling tape may include a portion made of a polymer material, as described below, and when the swelling tape is impregnated with an electrolyte solution, the portion made of the polymer material absorbs the electrolyte solution and thus may expand or become flexible. More specifically, a volume of the polymer material may be increased as solvent molecules enter between chains of the polymer material. Accordingly, the swelling tape may be expanded or become flexible when it absorbs an electrolyte solution.

According to an exemplary embodiment of the present invention, the swelling tape may be expanded by an electrolyte solution, and after expansion, the swelling tape may wrap around the first end portion of the first electrode. Specifically, the swelling tape may expand and increase in =length by absorbing an electrolyte solution including an organic solvent, as described below, and after expansion, one longitudinal end portion of the swelling tape may be extended and bent to wrap around the first end portion of the first electrode. In other words, after expansion, the swelling tape may increase in length and may bend to wrap around at least one edge of the first end portion of the first electrode.

With this configuration, the sharp free-edge of the positive electrode can be prevented from coming into direct contact with the separator or negative electrode, thereby preventing damage to the positive electrode and the separator from deformation of the electrode assembly due to contraction/expansion of the electrode during charging and discharging of the battery. Furthermore, even if the separator becomes damaged, the swelling tape can prevent an internal short between the positive electrode and the negative electrode to improve the stability and lifespan of the battery.

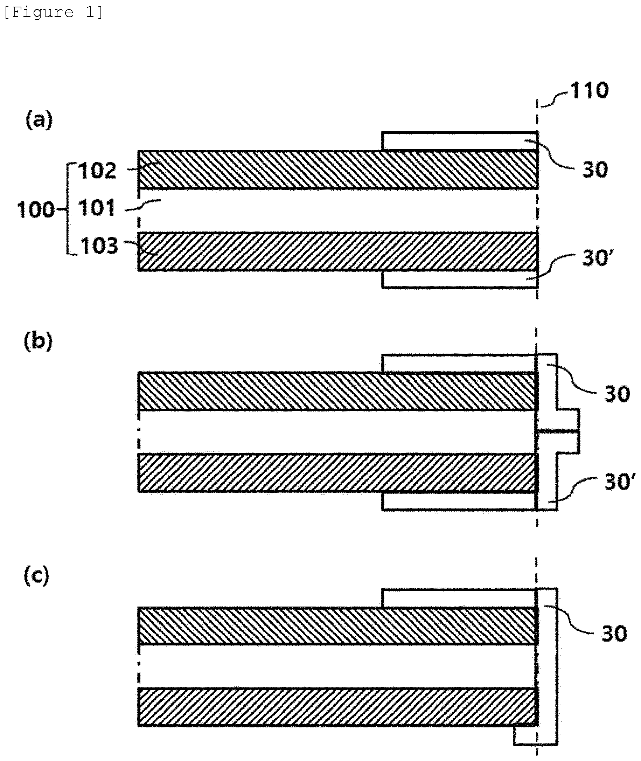

FIG. 1 shows a jelly-roll type electrode assembly including a swelling tape according to an exemplary embodiment of the present invention.

Specifically, (a) of FIG. 1 shows a first electrode including a swelling tape attached on both surfaces of the first electrode before impregnation with an electrolyte solution, (b) of FIG. 1 shows the first electrode including the swelling tape attached on both surfaces of the first electrode after impregnation with the electrolyte solution, and (c) of FIG. 1 shows a first electrode including a swelling tape attached on one surface of the first electrode after impregnation with an electrolyte solution.

Referring to FIG. 1(a), the swelling tape may be attached on both surfaces of the first electrode such that one end portion matches the first end portion of the first electrode, and referring to FIG. 1(b), the swelling tape is expanded by the electrolyte solution, and after expansion, the swelling tape may wrap around the first end portion of the first electrode. On the other hand, referring to FIG. 1(c), the swelling tape may be attached on one surface of the first electrode such that one end portion matches the first end portion of the first electrode, the swelling tape may be expanded by an electrolyte solution, and after expansion, the swelling tape may wrap around the first end portion of the first electrode.

According to an exemplary embodiment of the present invention, a length of the swelling tape after being impregnated with an electrolyte solution including 45 wt% of dimethyl carbonate, 20 wt% of ethylene carbonate, 15 wt% of ethyl methyl carbonate, and 15 wt% of LiPF₆ as an electrolyte for 60 minutes may be 120% or greater and 160% or less based on 100% of a length of the swelling tape before expansion. Specifically, the length of the swelling tape after expansion may be 120% or greater and 150% or less, 120% or greater and 140% or less, 120% or greater and 130% or less, 130% or greater and 160% or less, 140% or greater and 160% or less, 150% or greater and 160% or less, or 1300 or greater and 150% or less based on 100% of the length of the swelling tape before expansion.

Throughout this disclosure, the length of the swelling tape after expansion may include lengths both in the longitudinal direction and the width direction. That is, a ratio of the length of the swelling tape after expansion and the length of the swelling tape before expansion may be the same in the longitudinal direction and the width direction. Furthermore, the length of the swelling tape may refer to a length measured from one end portion to the other end portion of the swelling tape in a specific direction. For example, when measuring the length of the swelling tape after expansion from one end portion to the other end portion in the longitudinal direction, the length may be 120% or greater and 160% or less, and when measuring a length to one longitudinal end portion after expansion based on a longitudinal central portion of the swelling tape before expansion, the length may be 110% or greater and 130% or less.

If the length of the swelling tape after expansion satisfies the ranges described above, even when the swelling tape is attached on at least one surface of the first electrode such that one end portion corresponds to the first end portion of the first electrode, the swelling tape is impregnated with the electrolyte solution and may expand to a length suitable for effectively wrapping around the first end portion of the first electrode. Accordingly, the first end portion of the first electrode may be effectively protected, and an internal short may be prevented, and the lifespan and stability of the battery may be improved.

According to an exemplary embodiment of the present invention, the swelling tape may include a portion made of a polymer material that absorbs an electrolyte solution and is expanded or becomes flexible, and a portion having adhesiveness for attaching the swelling tape to the first electrode.

According to an exemplary embodiment of the present invention, the swelling tape may include a base layer and an adhesive layer, and the adhesive layer may be provided on at least one surface of the base layer. Specifically, the swelling tape may include a multilayer structure of a base layer that absorbs an electrolyte solution and is expanded when impregnated with the electrolyte solution and an adhesive layer that attaches the swelling tape to the first electrode, and the adhesive layer may be provided on one surface or both surfaces of the base layer.

According to an exemplary embodiment of the present disclosure, the adhesive layer may include a pressure-sensitive adhesive including a polyacrylic resin. That is, an adhesive force of the adhesive layer may be affected by a magnitude of pressure applied to a surface of the swelling tape.

According to an exemplary embodiment of the present disclosure, the adhesive layer may include one or more comonomers selected from the group consisting of poly methyl methacrylate (PMMA), poly ethyl methacrylate (PEMA), and poly butyl methacrylate (PBMA). Specifically, the adhesive layer may include a polyacrylic resin manufactured by copolymerizing a comonomer selected from the group consisting of monomers such as ethyl acrylate (EA), butyl acrylate (BA), and 2-ethylhexyl acrylate (2-EHA) with a comonomer selected from the group consisting of poly methyl methacrylate (PMMA), poly ethyl methacrylate (PEMA), and poly butyl methacrylate (PBMA). When the adhesive layer includes the materials described above, the adhesive force of the swelling tape can be maintained at an appropriate level while minimizing the effect on electrochemical properties of a battery including the swelling tape.

According to an exemplary embodiment of the present disclosure, the base layer may include a urethane-based resin. For example, the base layer may include a polyurethane resin, or the like. When the base layer includes the material described above, the electrolyte solution absorption of the swelling tape may be further facilitated, and when impregnated with the electrolyte solution, the swelling tape may be expanded to a length suitable for effectively wrapping around the first end portion of the first electrode.

According to an exemplary embodiment of the present disclosure, the electrolyte solution may include an organic solvent. Specifically, the organic solvent may include 70 wt% or more of any one of ethylene carbonate (EC), propylene carbonate (PC), dimethyl carbonate (DMC), ethyl methyl carbonate (EMC), and mixtures thereof. Specifically, the electrolyte solution may include a mixed organic solvent containing 45 wt% or more of dimethyl carbonate. For example, the electrolyte solution may include a mixed organic solvent containing 45 wt% of dimethyl carbonate, 20 wt% of ethylene carbonate, and 15 wt% of ethyl methyl carbonate.

Specifically, when the base layer includes a urethane-based resin, the base layer may expand by absorbing the electrolyte solution, and when the electrolyte solution includes the aforementioned type of organic solvent, the base layer including the urethane-based resin may expand more easily. That is, the swelling tape including the base layer can expand more easily, and the expanded swelling tape can effectively wrap around the first end portion of the first electrode to prevent a damage to the separator.

According to an exemplary embodiment of the present disclosure, the electrolyte solution may further include an electrolyte. Examples of the electrolyte may include a solid polymer electrolyte, a gel-type polymer electrolyte, a solid inorganic electrolyte, a molten-type inorganic electrolyte and the like that can be used in the manufacturing of the lithium secondary battery, but are not limited thereto.

Specifically, the electrolyte solution may include a metal salt such as LiPF₆, as the electrolyte, and for example, an electrolyte solution including 45 wt% of dimethyl carbonate, 20 wt% of ethylene carbonate, 15 wt% of ethyl methyl carbonate, and 15 wt% of LiPF₆ as an electrolyte may be used. When the electrolyte solution further includes the aforementioned type of electrolyte, the swelling characteristics of the swelling tape may be improved compared to a case where the electrolyte is not included, and the expanded swelling tape can effectively wrap around the first end portion of the first electrode to prevent damage to the separator.

According to an exemplary embodiment of the present disclosure, the first electrode may be a positive electrode, and the second electrode may be a negative electrode. That is, the jelly-roll type electrode assembly according to an exemplary embodiment of the present invention may be a jelly-roll type electrode assembly in which a positive electrode, a first separator, a negative electrode, and a second separator are sequentially stacked and wound, the jelly-roll type electrode assembly including a swelling tape attached on at least one surface of the positive electrode, wherein the positive electrode includes a first end portion from which winding begins along a longitudinal direction and a second end portion at which the winding ends, and wherein the swelling tape is attached such that one end portion corresponds to the first end portion of the positive electrode.

According to an exemplary embodiment of the present disclosure, the first electrode may include a current collector and an active material layer provided on the current collector. That is, the positive electrode may include a positive electrode current collector and a positive electrode active material layer arranged on the positive electrode current collector. Specifically, the positive electrode may include a positive electrode current collector and a positive electrode active material layer formed on one surface or both surfaces of the positive electrode current collector and including a positive electrode active material. Thus, the positive electrode active material layer is formed on a positive electrode coated portion of the positive electrode current collector, and a surface not provided with the positive electrode active material layer may be referred to as a positive electrode uncoated portion.

According to an exemplary embodiment of the present disclosure, the positive electrode current collector may include a positive electrode coating portion coated with a positive electrode active material and a positive electrode uncoated portion not coated with the positive electrode active material, and may include a tab on the positive electrode uncoated portion. Specifically, the positive electrode current collector may include a positive electrode uncoated portion, and a positive electrode tab formed on the positive electrode uncoated portion.

According to an exemplary embodiment of the present disclosure, the positive electrode current collector is not particularly limited as long as it has conductivity without inducing a chemical change in the battery. Specifically, for the positive electrode current collector, stainless steel, aluminum, nickel, titanium, fired carbon, aluminum or stainless steel each surface treated with carbon, nickel, titanium, silver, or the like may be used. That is, the positive electrode current collector may be provided in the form of surface-treated stainless steel, an aluminum foil or the like.

In addition, the positive electrode current collector may typically have a thickness of 3 to 50 um but is not limited thereto, and a surface of the current collector may be formed with microscopic irregularities to enhance an adhesive force of the positive electrode active material. For example, the positive electrode current collector may be used in various forms such as a film, a sheet, a foil, a net, a porous body, a foamed body, and a non-woven fabric body.

According to an exemplary embodiment of the present disclosure, the positive electrode active material may be a positive electrode active material that is typically used. Specifically, the positive electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide such as chemical formula Li₁₊ₓMn₂₋ₓO₄ (0≤x≤0.33), LiMnO₃, LiMn₂O₃ and LiMnO₂; a lithium copper oxide (Li₂CuO₂); a vanadium oxide such as LiV₃O₈, V₂O₃ and Cu₂V₂O₇; Ni-site type lithium nickel oxide represented by chemical formula LiNi_{1-y}M_{y}O₂ (where M is at least one selected from the group consisting of Co, Mn, Al, Cu, Fe, Mg, B, and Ga, and satisfies 0.01≤y≤0.3); a lithium manganese composite oxide represented by chemical formula LiMn_{2-z}M_{z}O₂ (where M is at least one selected from the group consisting of Co, Ni, Fe, Cr, Zn and Ta, and satisfies 0.01≤z≤0.1) or Li₂Mn₃MO₈ (where M is at least one selected from the group consisting of Fe, Co, Ni, Cu and Zn.); LiMn₂O₄ in which a part of Li of the chemical formula is substituted with an alkaline earth metal ion, or the like, but is not limited thereto. The positive electrode may be Li metal.

According to an exemplary embodiment of the present disclosure, the positive electrode active material layer may further include a positive electrode conductive material and a positive electrode binder. The positive electrode conductive material is used to impart conductivity to the electrode, and can be used without particular limitation as long as it does not cause a chemical change and has electronic conductivity with a battery. Specific examples of the positive electrode conductive material may include graphite such as natural graphite or artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, and the like, and any one thereof or a mixture of two or more thereof may be used.

In addition, the positive electrode binder serves to improve attachment between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

According to an exemplary embodiment of the present disclosure, the second electrode may include a current collector and an active material layer provided on the current collector. That is, the negative electrode may include a negative electrode current collector and a negative electrode active material layer arranged on the negative electrode current collector. Specifically, the negative electrode may include a negative electrode current collector and a negative electrode active material layer formed on one or both surfaces of the negative electrode current collector and may further include a negative electrode active material. In other words, the negative electrode active material layer is formed on a negative electrode coated portion of the negative electrode current collector, and a surface not provided with the negative electrode active material layer may be referred to as a negative electrode uncoated portion.

According to an exemplary embodiment of the present disclosure, the negative electrode current collector may include a negative electrode coated portion formed with a negative electrode active material layer and a negative electrode uncoated portion not formed with the negative electrode active material layer, and may include a tab on the negative electrode uncoated portion. Specifically, the negative electrode current collector may include a negative electrode uncoated portion, and a negative electrode tab formed on the negative electrode uncoated portion. Accordingly, the manufactured electrode assembly may include one or more negative electrode tabs.

According to an exemplary embodiment of the present invention, the negative electrode active material layer may include a negative electrode active material including one or more selected from the group consisting of a silicon-based material and a carbon-based material. In addition, the negative electrode active material layer may further include a negative electrode conductive material and a negative electrode binder, and the negative electrode active material, the negative electrode conductive material, and the negative electrode binder may be formed from materials that are used in the art may be used without limitation.

According to an exemplary embodiment of the present disclosure, the negative electrode current collector is not particularly limited as long as it has conductivity without causing a chemical change in the battery. For example, for the negative electrode current collector, copper, stainless steel, aluminum, nickel, titanium, fired carbon, aluminum or stainless steel each surface treated with carbon, nickel, titanium, silver, or the like, of the like may be used. Specifically, transition metals that adsorb carbon well, such as copper and nickel, may be used for the negative electrode current collector. A thickness of the negative electrode current collector may be 6 um or greater and 80 um or less. However, the thickness of the negative electrode current collector is not limited thereto.

According to an exemplary embodiment of the present invention, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

According to an exemplary embodiment of the present disclosure, the negative electrode conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; metal powders such as fluorocarbon, aluminum, and nickel powder; a conductive whisker such as zinc oxide and potassium titanate; a conductive metal oxide such as titanium oxide; a conductive material such as polyphenylene derivative, and the like may be used.

An exemplary embodiment of the present disclosure provides a method for manufacturing a jelly-roll type electrode assembly in which a first electrode, a first separator, a second electrode, and a second separator are sequentially stacked and wound, the method including: (a) transferring the first electrode in a roll-to-roll manner; (b) attaching a swelling tape on at least one surface of a slitting region included in the first electrode; and (c) slitting a longitudinal central portion of the slitting region of the first electrode, wherein in the (b) attaching step, the swelling tape is attached such that a longitudinal central portion of the swelling tape corresponds to the longitudinal central portion of the slitting region of the first electrode, and wherein in the (c) slitting, the longitudinal central portion of the slitting region is slit such that the first electrode is provided with a first end portion from which winding begins along a longitudinal direction and a second end portion at which the winding ends.

The method for manufacturing a jelly-roll type electrode assembly according to an exemplary embodiment of the present disclosure enables the jelly-roll type electrode assembly, which includes the swelling tape attached such that it expands and wraps around one longitudinal end portion of a positive electrode when impregnated with an electrolyte solution, to be produced in a continuous process manner using an existing roll-to-roll process facility, making it possible to increase productivity while reducing costs. In addition, the jelly-roll type electrode assembly manufactured according to the above method includes the swelling tape attached such that it expands and wraps around one longitudinal end portion of a positive electrode when impregnated with an electrolyte solution, thereby preventing damage to the positive electrode and the separator from deformation of the electrode assembly due to contraction/expansion of the electrode during charging and discharging of the battery. In addition, even if the separator is damaged, the swelling tape can prevent an internal short between the positive electrode and the negative electrode to improve the stability and lifespan of the battery.

According to an exemplary embodiment of the present disclosure, the method for manufacturing a jelly-roll type electrode assembly may include (a) a step of transferring the first electrode in a roll-to-roll manner. Specifically, the step (a) may be performed in a roll-to-roll manner in which a plurality of bendable metal foils and the like are processed while moving between rollers. Here, the roll-to-roll manner may refer to a manner of supplying an electrode current collector by unwinding a roll on which a flexible, thin metal sheet-like electrode current collector is wound, forming an electrode mixture layer by applying an electrode slurry including an electrode active material onto at least one surface of an electrode current collector and drying the electrode slurry, and then rewinding and collecting an electrode current collector processed from another roll. That is, the step (a) may be a step of transferring the first electrode for processing the same in the roll-to-roll manner, and may be expressed as a first electrode transferring step (S11).

According to an exemplary embodiment of the present disclosure, the method for manufacturing a jelly-roll type electrode assembly may include (b) a step of attaching a swelling tape on at least one surface of a slitting region included in the first electrode. The slitting region may refer to a region for cutting the first electrode by a slitting process of cutting the first electrode or an electrode assembly including the same to a set length, and the slitting region may refer to a partial region in the longitudinal direction including a first electrode current collector and a first electrode active material layer included in the first electrode, and the slitting region may be adjusted in longitudinal length according to process conditions. Furthermore, the slitting region may be changed in length and position according to a length and a position of the swelling tape attached. That is, the slitting region may be set by changing the length and position of the swelling tape attached on one surface or both surfaces of the first electrode according to process conditions.

According to an exemplary embodiment of the present disclosure, in the step (b), the swelling tape may be attached such that a longitudinal central portion of the swelling tape matches the longitudinal central portion of the slitting region of the first electrode. Specifically, in the step (b), the swelling tape may be attached on at least one surface of the slitting region included in the first electrode such that a longitudinal central portion of the swelling tape matches the longitudinal central portion of the slitting region of the first electrode. With this, in a subsequent step of slitting a longitudinal central portion of the slitting region, the first electrode may be provided with a first end portion from which winding begins along a longitudinal direction and a second end portion at which the winding ends, and the first electrode may be provided in a state in which a swelling tape of a predetermined length is attached on at least one surface of the first end portion and the second end portion after the slitting step.

According to an exemplary embodiment of the present disclosure, the step (b) may be a step of attaching a swelling tape on at least one surface of the slitting region included in the first electrode, and specifically, the step (b) may be a step of attaching a swelling tape on one surface or both surfaces of the slitting region included in the first electrode and may be expressed as a swelling tape attaching step (S12).

According to an exemplary embodiment of the present invention, the method for manufacturing a jelly-roll type electrode assembly may include (c) a step of slitting a longitudinal central portion of the slitting region of the first electrode. Specifically, the step (c) may be a step of cutting the first electrode or an electrode assembly including the same to a set length, and the cutting may be performed using a cutting knife or the like, but is not particularly limited.

According to an exemplary embodiment of the present disclosure, the step (c) may be a step of slitting the longitudinal central portion of the slitting region such that the first electrode is provided with a first end portion from which winding begins along a longitudinal direction and a second end portion at which the winding ends. Specifically, the step (c) may be a step of slitting the longitudinal central portion of the slitting region such that the first electrode or a first electrode included in the electrode assembly is provided with a first end portion from which winding begins along a longitudinal direction and a second end portion at which the winding ends. The step (c) may be performed in multiple steps, and when performed during the first electrode preparation process (S10), the step (c) may be expressed as a slitting step (S13).

According to an exemplary embodiment of the present disclosure, the steps (a) and (b) may be performed during the first electrode preparation process (S10), and the step (c) may be performed during the first electrode preparation process (S10) or after the first electrode preparation process (S10). Specifically, the step (c) may be performed before or after the winding process (S50). More specifically, the step (c) may be performed after the winding process (S50).

When using a protective tape in order to protect the electrode end portion exposed through the slitting step, a separate process may be required to check a position of the slit electrode end portion after the electrode is slit and to properly attach the protective tape to wrap around the slit electrode end portion, and after attaching the protective tape to the end portion of the electrode, an inspection process, for example, a vision inspection step for ruling out attachment defects may be additionally required. In addition, when the winding process is performed only after the vision inspection step in order to reduce defects in the electrode assembly, the production speed of the jelly-roll type electrode assembly may be greatly reduced, so that the roll-to-roll process may be virtually impossible.

The method for manufacturing a jelly-roll type electrode assembly according to an exemplary embodiment of the present disclosure can enable the jelly-roll type electrode assembly including the swelling tape to be produced in a continuous process manner using an existing roll-to-roll process facility. In other words, the method for manufacturing a jelly-roll type electrode assembly includes the swelling tape attaching step (S12) in the first electrode preparation process (S10), so that the step (c) may be performed during the first electrode preparation process (S10) or after the first electrode preparation process (S10), and therefore, the entire process can be performed by a roll-to-roll process known in the art. That is, the method for manufacturing a jelly-roll type electrode assembly according to an exemplary embodiment of the present invention enables the jelly-roll type electrode assembly, which includes the swelling tape attached such that it expands and wraps around one longitudinal end portion of a positive electrode when impregnated with an electrolyte solution, to be produced in a continuous process manner using an existing roll-to-roll process facility, making it possible to secure productivity and economic efficiency.

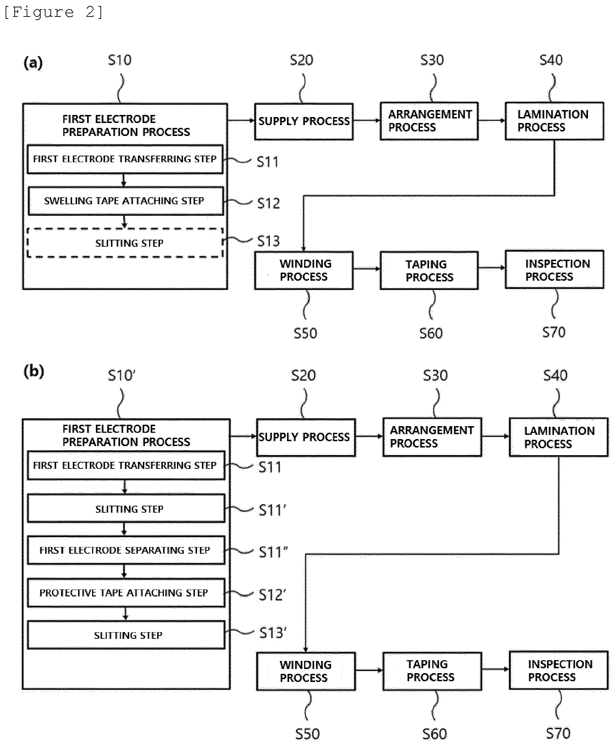

FIG. 2 shows schematic diagrams of a method for manufacturing a jelly-roll type electrode assembly including a swelling tape according to an exemplary embodiment of the present invention and a method for manufacturing a jelly-roll type electrode assembly including a PET tape.

Specifically, FIG. 2(a) schematically shows a method for manufacturing a jelly-roll type electrode assembly including a swelling tape according to an exemplary embodiment of the present disclosure, in which the method for manufacturing a jelly-roll type electrode assembly includes a step (S12) of attaching the swelling tape, and FIG. 2(b) schematically shows a method for manufacturing a jelly-roll type electrode assembly including a PET tape, in which a PET protective tape instead of the swelling tape is attached to wrap around the first end portion of the first electrode.

Referring to FIG. 2(b), in order to attach a protective tape to wrap around the first end portion of the first electrode, as in a jelly-roll type electrode assembly including a swelling tape according to an exemplary embodiment of the present disclosure, an additional process may be required. That is, when a protective tape (PET) attaching step (S12') is included instead of the swelling tape attaching step (S12), an additional process may be required to produce an electrode with a similar structure.

Specifically, when a protective tape (PET) attaching step (S12') is included instead of the swelling tape attaching step (S12), a step (S11') of slitting the first electrode after the first electrode transferring step (S11), and a first electrode spacing step (S11") of spacing the slit first electrode by a predetermined distance in order to attach a protective tape made of PET may be required, and an additional slitting step (S13') of slitting the attached protective tape to wrap around a longitudinal end portion of the first electrode may be further required.

More specifically, when a protective tape (PET) attaching step (S12') is included instead of the swelling tape attaching step (S12), a step (S11') of stopping a winder for the first electrode under traveling and then performing slitting may be performed, and a step (S11") of spacing the first electrode in consideration of a thickness of the first electrode so as to sufficiently wrap around the first end portion of the slit first electrode may be further required. Thereafter, a step (S12') of attaching a protective tape on both surfaces of the spaced first electrode and an additional slitting step (S13') of cutting the attached protective tape may be further required.

That is, when the PET protective tape is used instead of the swelling tape, the predetermined additional processes may be required in order to provide a structure similar to the jelly-roll type electrode assembly including the swelling tape according to an exemplary embodiment of the present disclosure.

In other words, the method for manufacturing a jelly-roll type electrode assembly according to an exemplary embodiment of the present disclosure includes the swelling tape attaching step (S12), so that it is possible to provide a jelly-roll type electrode assembly including the swelling tape attached to wrap around one longitudinal end portion of a positive electrode while minimizing separate additional processes. In addition, productivity and cost-savings can be realized by enabling production in a continuous process using an existing roll-to-roll processing facility.

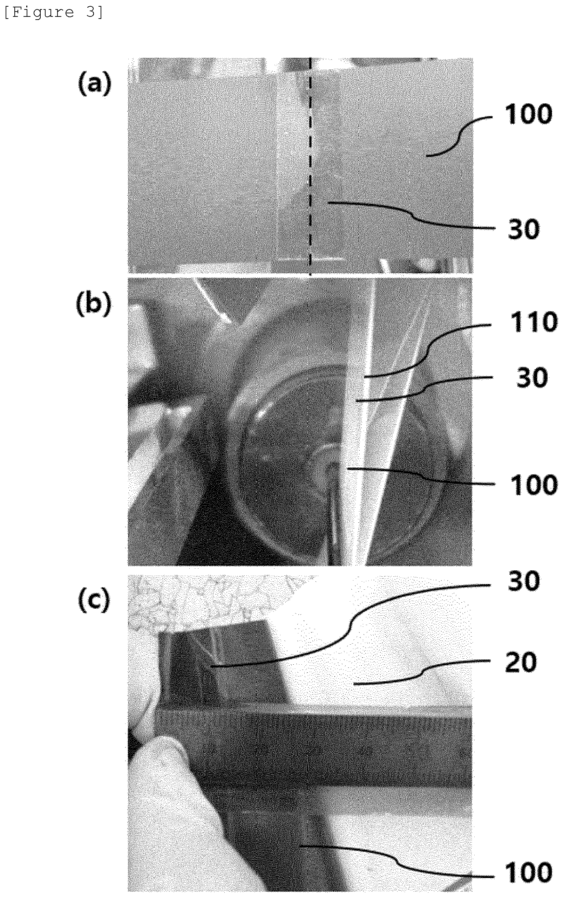

FIG. 3 is an image showing an implemented example of a method for manufacturing a jelly-roll type electrode assembly according to an exemplary embodiment of the present disclosure.

Specifically, FIG. 3(a) shows the swelling tape attached on a slitting region included in the first electrode in a winding process (S50) after the swelling tape attaching step (S12). FIG. 3(b) the swelling tape attached such that one end portion matches the first end portion of the first electrode after the slitting step (S13). FIG. 3(c) of FIG. 3 shows an attached state of the swelling tape by disassembling the jelly-roll type electrode assembly after the winding process (S50).

Referring to FIG. 2(a), the method for manufacturing a jelly-roll type electrode assembly according to an exemplary embodiment of the present disclosure may further include a supply process (S20), an arrangement process (S30), a lamination process (S40), a winding process (S50), a taping process (S60), an inspection process (S70), and the like.

Specifically, the supply process (S20) may be a process of supplying the first electrode and the second electrode together with the first separator and the second separator after the first electrode preparation process (S10), and the arrangement process (S30) may be a process of sequentially arranging the first electrode, the first separator, the second electrode, and the second separator supplied in the supply process (S20) and forming a stack.

In addition, the lamination process (S40) may be a process of pressurizing and heat-fusing the stack manufactured in the arrangement process (S30), that is, the stack including the first electrode, the first separator, the second electrode, and the second separator, thereby providing an electrode assembly.

Note that the winding process (S50) may be a process of winding the electrode assembly on which the lamination process has been performed, and may further include a slitting process of cutting the electrode assembly to a set length before or after the winding process.

Next, the taping process (S60) may be a process of finishing an outer surface of the electrode assembly wound in the winding process (S50) with a seal tape, and the taping process may be performed to prevent defects such as the electrode assembly coming loose as a result of longitudinal end portions of the first electrode, the first separator, the second electrode, and the second separator being spaced apart.

The inspection process (S70) may include a vision inspection step of determining defects by inspecting shapes, arrangements, damages, and the like of the first electrode, the first separator, the second electrode, and the second separator included in the electrode assembly, and a withstand voltage test step of determining defects by supplying power to the electrode assembly and measuring a withstand voltage.

According to an exemplary embodiment of the present disclosure, the swelling tape used in the method for manufacturing a jelly-roll type electrode assembly may be the same as the swelling tape described above with respect to the jelly-roll type electrode assembly.

According to an exemplary embodiment of the present disclosure, a width of the swelling tape may be 60% or greater and 100% or less based on 100% of a width of the first electrode. Specifically, the widthof the swelling tape may be 70% or greater and 100% or less, 80% or greater and 100% or less, 60% or greater and 90% or less, 60% or greater and 80% or less, 60% or greater and 70% or less, or 70% or greater and 90% or less based on 100% of the width of the first electrode. When the width of the swelling tape satisfies the ranges described above, the width of the swelling tape after expansion may correspond to the widths of the first electrode, and one end portion of the swelling tape effectively wraps around one longitudinal end portion of the first electrode. Thereby, the swelling tape can more effectively prevent an internal short between the positive electrode and the negative electrode even if the separator is damaged.

According to an exemplary embodiment of the present invention, a length, in a longitudinal direction, of the swelling tape may be 500% or greater and 7000% or less based on 100% of a thickness of the first electrode. Specifically, the length of the swelling tape may be 600% or greater, 700% or greater, 800% or greater, or 1000% or greater based on 100% of the thickness of the first electrode, and the length of the swelling tape may be 6000% or less, 5000% or less, 4000% or less, or 3000% or less, preferably 2000% or less, 1700% or less, or 1400% or less based on 100% of the thickness of the first electrode. When the length, in the longitudinal direction, of the swelling tape satisfies the ranges described above, the length of the swelling tape slit after the step (c) may be within an appropriate range, that is, 250% or greater and 3500% or less, and preferably 250% or greater and 1000% or less based on 100% of the thickness of the first electrode, the length, in the longitudinal direction, of the swelling tape after expansion may correspond to the thickness of the first electrode, and one end portion of the swelling tape effectively wraps around one longitudinal end portion of the first electrode, thereby more effectively minimizing the effect on electrochemical properties such as the capacity reduction rate of the battery including the swelling tape and preventing an internal short between the positive electrode and negative electrode even when the separator is damaged.

According to an exemplary embodiment of the present disclosure, the length, in the longitudinal direction, of the swelling tape may be 0.75 mm or longer and 10 mm or less. Specifically, the length, in the longitudinal direction, of the swelling tape may be 1 mm or longer, 1.25 mm or longer, 1.5 mm or longer, 1.75 mm or longer, or 2 mm or longer, and the length, in the longitudinal direction, of the swelling tape may be 2.75 mm or less, 2.5 mm or less, 2.25 mm or less, or 2 mm or less. When the length, in the longitudinal direction, of the swelling tape satisfies the range described above, it can be easy to manufacture a swelling tape whose longitudinal length corresponds to the thickness of the first electrode even when there is a certain process deviation.

According to an exemplary embodiment of the present disclosure, the first electrode may be a positive electrode, and the second electrode may be a negative electrode. A positive electrode and a negative electrode used in the method for manufacturing a jelly-roll type electrode assembly may be the same as those described above with respect to the jelly-roll type electrode assembly.

An exemplary embodiment of the present disclosure provides a jelly-roll type electrode assembly manufactured by the above-described method for manufacturing a jelly-roll type electrode assembly.

The jelly-roll type electrode assembly according to an exemplary embodiment of the present invention includes the swelling tape attached such that it expands and wraps around one longitudinal end portion of a positive electrode when impregnated with an electrolyte solution, thereby preventing a damage to the positive electrode and the separator from deformation of the electrode assembly due to contraction/expansion of the electrode during charging and discharging of the battery. In addition, even if the separator is damaged, the swelling tape can prevent an internal short between the positive electrode and the negative electrode to improve the stability and lifespan of the battery. Additionally, when the swelling tape wraps around the longitudinal end portion of the first electrode, the effects of relieving internal stress and improving roundness of the core portion may be improved due to porous material characteristics of the swelling tape.

An exemplary embodiment of the present disclosure provides a secondary battery including the jelly-roll type electrode assembly described above, and a battery case for accommodating the electrode assembly. Specifically, the secondary battery may include the electrode assembly according to an exemplary embodiment described above and a battery case for accommodating the electrode assembly.

The secondary battery according to the present disclosure can prevent an internal short between the positive electrode and the negative electrode even when the electrode assembly is deformed due to contraction/expansion of the electrode during charging and discharging of the battery, thereby improving the stability and lifespan of the battery.

According to an exemplary embodiment of the present disclosure, the battery case may have a cylindrical shape. Specifically, the battery case may have a cylindrical shape, a square shape, a pouch shaped or the like depending on uses, but is not limited thereto.

According to an exemplary embodiment of the present invention, the battery case may include an electrolyte therein. Specifically, the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but is not limited thereto. Specifically, the electrolyte may include a non-aqueous organic solvent and a metal salt.

According to an exemplary embodiment of the present disclosure, as the non-aqueous organic solvent, for example, an aprotic organic solvent such as N-methyl-2-pyrrolidinone, propylene carbonate, ethylene carbonate, butylene carbonate, dimethyl carbonate, diethyl carbonate, ethyl methyl carbonate, gamma-butyllolactone, 1,2-dimetoxy ethane, tetrahydrofuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, and ethyl propionate may be used.

According to an exemplary embodiment of the present disclosure, a lithium salt may be used as the metal salt, and the lithium salt is a material that is readily soluble in the non-aqueous electrolyte solution, in which, for example, one or more species selected from the group consisting of F-, Cl-, I-, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

According to an exemplary embodiment of the present disclosure, one or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving the lifetime characteristic of the battery, suppressing a decrease in battery capacity, improving discharge capacity of the battery, and the like, in addition to the above-described electrolyte components.

### Mode for Invention

Below, Examples will be described in detail to specifically describe the present disclosure. However, the Examples according to the present disclosure may be modified in other forms, and the scope of the present disclosure is not construed as being limited to the following Examples. The Examples of the present specification are provided to more completely explain the present disclosure to one skilled in the art.

### Examples

### Example 1

### Preparation of Electrode Assembly

A positive electrode having a total thickness of 154 um was prepared by preparing an Al foil having a thickness of 15 um and a length of 63.9 mm in the width direction as a positive electrode current collector, and applying and drying a positive electrode active material slurry including an NMCA (Ni-Mn-Co-Al) composite having a Ni content of 92% or more as a positive electrode active material and CNTs as a conductive material on the positive electrode current collector to form a positive electrode active material layer.

Thereafter, a swelling tape with a thickness of 52 um having an adhesive layer including a copolymer of ethyl acrylate (EA) and polyethyl methacrylate (PEMA) on one surface of a base layer made of polyurethane (PU) was prepared, and was attached on one surface of a slitting region of the positive electrode to have a length of 62 mm in the width direction and a length of 10 mm in the longitudinal direction.

Next, a negative electrode having a total thickness of 187 um was prepared by preparing a Cu foil having a thickness of 10 um and a length of 62 mm in the width direction as a negative electrode current collector, and applying and drying a negative electrode active material slurry including artificial graphite and natural graphite as a negative electrode active material in an amount of 50 parts by weight, respectively, on the negative electrode current collector to form a negative electrode active material layer.

Note that as a first separator and a second separator, two sheet-like polyethylene separators were prepared.

Thereafter, the positive electrode, the first separator, the negative electrode, and the second separator were sequentially arranged to form a stack, which was then pressurized and heat-fused. A central portion of the slitting region was slit, the stack was wound such that a first end portion the positive electrode from which winding begins was located in the core portion, and a seal tape made of PET was attached to a second end portion at which the winding ends to wrap around upper and lower outer peripheral surfaces of the jelly-roll and finished, resulting in a jelly-roll type electrode assembly. In this case, the seal tape with a length of 62 mm in the longitudinal direction, a length of 10 mm in the width direction, and a thickness of 22 um was used, and a length of the swelling tape after slitting was 5 mm.

### Preparation of Secondary Battery

A secondary battery was prepared by inserting the jelly-roll type electrode assembly into a cylindrical battery case, injecting an electrolyte solution in which ethylene carbonate (EC), dimethyl carbonate (DMC), and ethyl methyl carbonate (EMC) were mixed at a weight ratio of 4:9:3 and LiPF₆ was dissolved to be 15 wt%, and sealing the cylindrical battery case with a cap assembly.

### Example 2

A jelly-roll type electrode assembly and a secondary battery were prepared in the same manner as in Example 1, except that the swelling tape was attached on each of both surfaces of the slitting region of the positive electrode to have a length of 62 mm in the width direction and a length of 5 mm in the longitudinal direction.

### Comparative Example 1

A jelly-roll type electrode assembly and a secondary battery were prepared in the same manner as Example 1, except that a PET tape was attached on one surface of the slitting region of the positive electrode to have a length of 62 mm in the width direction and a length of 10 mm in the longitudinal direction.

### Comparative Example 2

A jelly-roll type electrode assembly and a secondary battery were prepared in the same manner as in Example 1, except that the swelling tape was not attached in the slitting region of the positive electrode.

### Comparative Example 3

A jelly-roll type electrode assembly and a secondary battery were prepared in the same manner as in Example 1, except that the central portion of the slitting region was slit without attaching the swelling tape in the slitting region of the positive electrode, the slit positive electrode was spaced, a PET tape was attached on each of both surfaces of the slitting region to have a length of 62 mm in the width direction and a length of 10 mm in the longitudinal direction, and then the central portion was additionally slit, resulting in the structure of (b) of FIG. 1.

### Experimental Examples

### Experimental Example 1 - Swelling Evaluation

A sample (a length of 10 mm in the longitudinal direction and a length of 62 mm in the width direction) made of the same material as the swelling tape used in Example 1 and Example 2 was prepared, and an electrolyte solution in which LiPF₆ as an electrolyte was dissolved in a mixed solvent of ethylene carbonate (EC), dimethyl carbonate (DMC), and ethyl methyl carbonate (EMC) was prepared. Thereafter, the swelling tape sample was impregnated with the electrolyte solution for 60 minutes, and a length of the swelling tape before expansion and a length of the swelling tape after expansion were measured, respectively. Here, the composition of the electrolyte solution used for swelling evaluation is shown in Table 1 below. The swelling characteristics of the swelling tape samples were evaluated in the same manner in Experimental Examples 1-1 to 1-6, except that the samples were impregnated with electrolyte solutions of the compositions shown in Table 1 below.

**[Table 1]**

| | Solvent | | | | Salt | Degree of expansion | |
|---|---|---|---|---|---|---|---|
| | EC (wt%) | PC (wt%) | DMC (wt%) | EMC (wt%) | LiPF₆ (wt%) | TD (%) | MD (%) |
| Reference Example 1-1 | - | - | 100 | - | - | 118 | 117 |
| Experimental Example 1-1 | 18.53 | - | 45.01 | 14.31 | 15.95 | 136 | 138 |
| Experimental Example 1-2 | 27.12 | 4.11 | 47.59 | - | 15.48 | 137 | 136 |
| Experimental Example 1-3 | 28.02 | 4.24 | 49.18 | - | 15.56 | 140 | 140 |
| Experimental Example 1-4 | 26.33 | 3.99 | 46.2 | - | 7.61 | 141 | 140 |
| Experimental Example 1-5 | 27.37 | 4.14 | 48.03 | - | 15.46 | 138 | 140 |
| Experimental Example 1-6 | 27.58 | 4.18 | 48.4 | - | 15.54 | 140 | 139 |

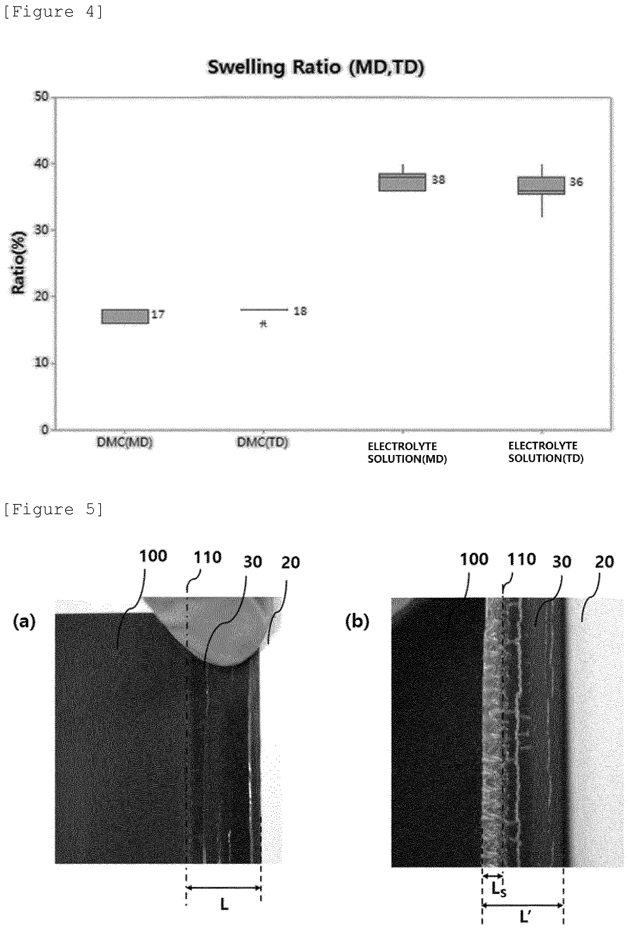

Thereafter, a ratio of the length of the swelling tape after expansion to the length of the swelling tape before expansion was calculated and shown in Table 1 and FIG. 4. Specifically, FIG. 4 shows calculated ratios of the lengths, in the width direction (transverse direction; TD) and the longitudinal direction (machine direction; MD), of the swelling tape after expansion with respect to the length of the swelling tape before expansion after impregnating the swelling tape sample in the DMC and the electrolyte solution having the composition of Experimental Example 1-1 for 60 minutes, respectively.

Referring to Table 1, it was confirmed that when impregnated with the electrolyte solutions having the compositions of Experimental Examples 1-1 to 1-6, the lengths and widths of the swelling tape after expansion were about 140% of the length of the swelling tape before expansion. Specifically, referring to Experimental Examples 1-1 to 1-6, it was confirmed that the presence or absence and adjusted contents of other solvent components in addition to dimethyl carbonate (DMC), namely, ethylene carbonate (EC), propylene carbonate (PC), and ethyl methyl carbonate (EMC) slightly affected the swelling characteristics of the swelling tape depending on the composition of the mixed solvent, but there was no significant difference. On the other hand, referring to Reference Example 1-1 and Experimental Examples 1-1 to 1-6, it was confirmed that when LiPF₆ used as an electrolyte was added by about 7 wt% and about 15 wt%, that is, when the contents of the electrolyte were different, the difference in degree of expansion was within about 3%. It was also confirmed that when the content of the electrolyte was 0%, that is, when no electrolyte was added, the difference in degree of expansion was about 15%. With the above results, it can be seen that the presence or absence of electrolyte shows a relatively large difference in the swelling characteristics of the swelling tape.

Referring to FIG. 4, it was confirmed that when impregnated with the electrolyte solution having the composition of Experimental Example 1-1, the lengths and widths of the swelling tape after expansion were about 140% of the length of the swelling tape before expansion. Specifically, it was confirmed that the length expansion of the swelling tape occurred at the same ratio in both the length and width directions and that the swelling tape expanded by about 120% on one side from the central portion to one end portion of the swelling tape before expansion. With the above results, it is possible to know the minimum lengths and widths of the swelling tape that should be attached in order for one end portion of the expanded swelling tape to protect one end portion of the first electrode.

### Experimental Example 2 - Activation Evaluation

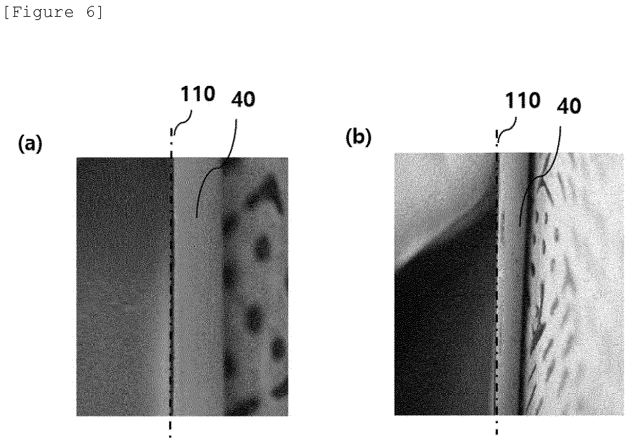

The secondary batteries prepared in Example 1 and Comparative Example 1 were activated by performing 2 cycles of 4.2 V-2.5 V, 0.2 C charging, and 0.2 C discharging, respectively, and then disassembled to prepare jelly-roll type electrode assemblies before and after activation. Then, the end portion of the positive electrode of each of the jelly-roll type electrode assemblies was observed with naked eyes, and the evaluation results are shown in FIGS. 5 and 6 below.

Specifically, FIG. 5(a) shows the first end portion of the first electrode of the jelly-roll type electrode assembly before activation according to Example 1, FIG. 5(b) shows the first end portion of the first electrode of the jelly-roll type electrode assembly after activation according to Example 1, FIG. 6(a) shows the first end portion of the first electrode of the jelly-roll type electrode assembly before activation according to Comparative Example 1, and FIG. 6(b) shows the first end portion of the first electrode of the jelly-roll type electrode assembly after activation according to Comparative Example 1

Referring to FIG. 5, in the case of the jelly-roll type electrode assembly according to Example 1, it was confirmed that the swelling tape attached such that one end portion matched the first end portion of the first electrode before activation was expanded after activation to wrap around the first end portion of the first electrode. In this case, the length (2L) of the swelling tape attached on at least one surface of the slitting region included in the first electrode was 10 mm, and after the step of slitting the longitudinal central portion of the slitting region of the first electrode, the length (L) of the swelling tape before expansion was 5 mm, the length (L') of the swelling tape after expansion was 7 mm, and the expanded length (Lₛ) of the swelling tape was a total of 2 mm. In other words, it was confirmed that the length (L') of the swelling tape after expansion expanded by about 140% of the length (L) of the swelling tape before expansion and expanded by 1 mm on one side from the central portion to one end portion of the swelling tape before expansion, i.e., by 120% of the length (L) of the swelling tape before expansion. With the above results, it was confirmed that the jelly-roll type electrode assembly including the swelling tape according to the present disclosure is expanded by the electrolyte solution, and after expansion, the swelling tape effectively wraps around the first end portion of the first electrode.

On the other hand, referring to FIG. 6, in the case of the jelly-roll type electrode assembly according to Comparative Example 1, it was confirmed that the PET tape attached such that one end portion matched the first end portion of the first electrode before activation was not expanded even after activation and the first end portion of the first electrode was exposed.

### Experimental Example 3 - Cycle Stability Evaluation

The secondary batteries prepared in Example 1 and Comparative Example 2 were tested for battery characteristics in a 25°C cycle test.

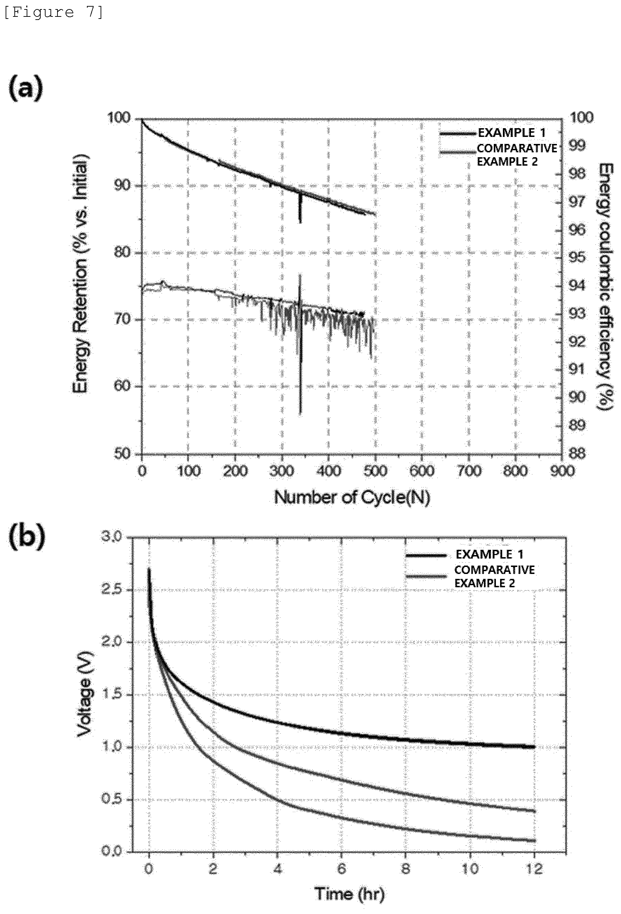

Specifically, after 500 cycles, the coulombic efficiency was analyzed in order to check a short behavior during the cycle, the room temperature-voltage tracking was performed in order to evaluate an abnormal behavior in more detail, and the evaluation results are shown in FIG. 7.

Specifically, FIG. 7(a) shows the change in coulombic efficiency with respect to cycle progress for the secondary batteries prepared in Example 1 and Comparative Example 2, and FIG. 7(b) shows the room temperature-voltage tracking evaluation result over time for the secondary batteries prepared in Example 1 and Comparative Example 2.

Referring to FIG. 7(a), it was confirmed that the secondary battery according to Example 1 did not exhibit any special abnormal behavior, but the secondary battery according to Comparative Example 2 exhibited an abnormal coulombic efficiency behavior, that is, an occurrence of leak current. In addition, referring to FIG. 7(b), it was confirmed that the secondary battery according to Example 1 maintained a voltage of 1.0 V or higher even after 12 hours, but the secondary battery according to Comparative Example 2 failed to maintain a constant voltage and gradually decreased in voltage over time. With this, it can be seen that the separator was damaged and an internal short occurred.

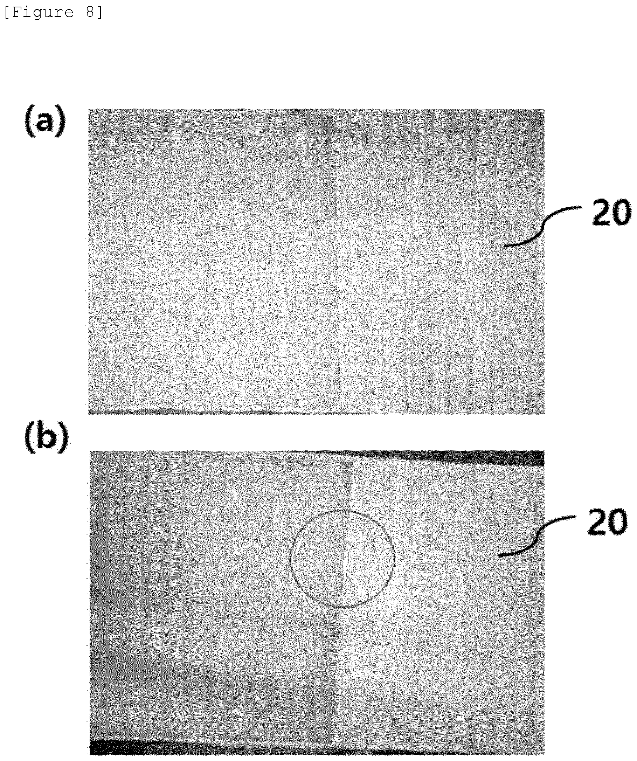

Thereafter, the secondary battery according to Example 1 was disassembled and visually evaluated for the presence or absence of damage to the separator, and the results are shown in FIG. 8.

Specifically, FIG. 8(a) is an image showing a state of a portion of the separator facing the first electrode included in the secondary battery prepared in Example 1, and FIG. 8(b) is an image showing a state of a portion of the separator facing the first electrode included in the secondary battery prepared in Comparative Example 2.

Referring to FIG. 8, it was confirmed that damage occurred in the separator of the secondary battery according to Comparative Example 2 where a swelling tape was not attached.

With this, it can be confirmed that the secondary battery according to the present disclosure can prevent an internal short between the positive electrode and the negative electrode even when the electrode assembly is deformed due to contraction/expansion of the electrode during charging and discharging of the battery, thereby improving the stability and lifespan of the battery.

### Experimental Example 4 - Roundness Evaluation and Productivity Evaluation

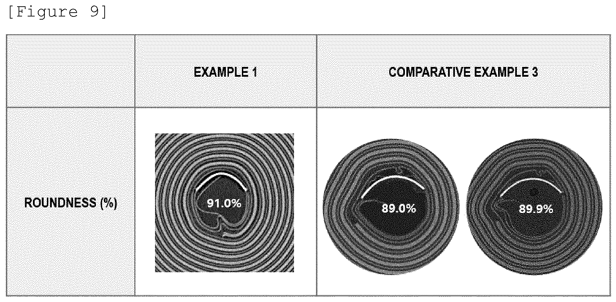

In order to confirm the degree of improvement in deformation of the secondary batteries prepared in Example 1 and Comparative Example 3, the roundness was evaluated after 20 cycles at 25°C, and results thereof are shown in Table 2 and FIG. 9. Here, the roundness (circularity) (%) indicates a degree to which a shape of an electrode assembly is closer to a circle. For the roundness, the maximum and minimum separation distances between the winding axis and the positive electrode were measured from the computed tomography (CT) image of the positive electrode, and the ratio (%) of the minimum separation distance between the winding axis and the positive electrode with respect to 100% of the maximum separation distance between the winding axis and the positive electrode was calculated.

In addition, in order to evaluate the productivity of each jelly-roll type electrode assembly, the time required to prepare the jelly-roll type electrode assembly, that is, the takt time was measured and is shown in Table 2.

**[Table 2]**

| | Takt time (sec) | Roundness (%) |
|---|---|---|
| Example 1 | 1.55 | 91 |
| Comparative Example 3 | 3.0 | 89.0-89.9 |

FIG. 9 is an image showing results of roundness evaluation for secondary batteries prepared in Example 1 and Comparative Example 3. Referring to Table 2, in the case of the secondary battery according to Comparative Example 3 where the longitudinal end portion of the positive electrode was wrapped around using the PET protective tape, and after expansion, a structure similar to that of the secondary battery according to Example 1 including a swelling tape was provided, it was confirmed that the takt time was 3.0s, i.e., increased approximately twice, as compared with the secondary battery according to Example 1, and the productivity was lower.

With this, it can be seen that the method for manufacturing a jelly-roll type electrode assembly according to an exemplary embodiment of the present invention includes the step of attaching a swelling tape, and thus enables the jelly-roll type electrode assembly, which includes the swelling tape attached in order to wrap around one longitudinal end portion of the positive electrode while minimizing separate additional processes, to be provided and produced in a continuous process manner using an existing roll-to-roll process facility, making it possible to improve productivity and cost savings.

Note that referring to Table 2 and FIG. 9, in the case of the secondary battery according to Comparative Example 3, it was confirmed that the roundness was 90% or less, which was similar or less than the degree of safety improvement of the secondary battery according to Example 1.

With this, it can be seen that the secondary battery according to the present disclosure includes a structure where the swelling tape wraps around the longitudinal end portion of the first electrode after expansion, so that even when the electrode assembly is deformed due to contraction/expansion of the electrode during charging and discharging of the battery, the internal short between the positive electrode and the negative electrode can be prevented to improve the stability and lifespan of the battery, and the effects of relieving internal stress and improving roundness of the core portion are excellent due to porous material characteristics of the swelling tape.

The foregoing detailed description is intended to illustrate and explain the present invention. In addition, the foregoing description is only to show and describe the preferred embodiment of the present invention, and as described above, the present invention can be used in various other combinations, changes and environments, and can be changed and modified within the scope of the concept of the invention disclosed in the present specification, within the scope equivalent to the above disclosure and/or within the scope of skill or knowledge in the art. Accordingly, the foregoing detailed description of the invention is not intended to limit the invention to the disclosed embodiments. Furthermore, the appended claims should be construed to include other embodiments as well.

## Claims

1. A jelly-roll type electrode assembly comprising:
a first electrode, a first separator, a second electrode, and a second separator sequentially stacked and wound;
a swelling tape attached on at least one surface of the first electrode,
wherein the first electrode includes a first end portion from which winding begins and a second end portion opposite the first end portion at which the winding ends, and
wherein the swelling tape is attached such that a first end portion of the swelling tape aligns with the first end portion of the first electrode.

2. The jelly-roll type electrode assembly of claim 1, wherein a width of the swelling tape is 60% or greater and 100% or less based on 100% of a width of the first electrode.

3. The jelly-roll type electrode assembly of claim 1, wherein a length of the swelling tape is 250% or greater and 3500% or less based on 100% of a thickness of the first electrode.

4. The jelly-roll type electrode assembly of claim 1, wherein the swelling tape is configured to expand when exposed to an electrolyte solution, and
wherein after expansion, the swelling tape is configured to wrap around the first end portion of the first electrode.

5. The jelly-roll type electrode assembly of claim 4, wherein the electrolyte solution includes 70 wt% or more of at least one one of ethylene carbonate (EC), propylene carbonate (PC), dimethyl carbonate (DMC), ethyl methyl carbonate (EMC).

6. The jelly-roll type electrode assembly of claim 4, wherein after the electrode assembly is exposed to electrolyte solution including 45 wt% of dimethyl carbonate, 20 wt% of ethylene carbonate, 15 wt% of ethyl methyl carbonate and 15 wt% of LiPF₆ as an electrolyte for 60 minutes, the swelling tape is configured to expand to a length of 120% or greater and 160% or less based on 100% of a length of the swelling tape before expansion.

7. The jelly-roll type electrode assembly of claim 1, wherein the swelling tape includes a base layer and an adhesive layer, and
wherein the adhesive layer is provided on at least one surface of the base layer.

8. The jelly-roll type electrode assembly of claim 7, wherein the adhesive layer includes a pressure-sensitive adhesive including a polyacrylic resin.

9. The jelly-roll type electrode assembly of claim 7, wherein the adhesive layer includes one or more comonomers selected from the group consisting of poly methyl methacrylate (PMMA), poly ethyl methacrylate (PEMA), and poly butyl methacrylate (PBMA).

10. The jelly-roll type electrode assembly of claim 7, wherein the base layer includes a urethane-based resin.

11. The jelly-roll type electrode assembly of claim 1, wherein the first electrode is a positive electrode, and the second electrode is a negative electrode.

12. The jelly-roll type electrode assembly of claim 1, wherein the first electrode includes a current collector and an active material layer provided on the current collector.

13. A method for manufacturing a jelly-roll type electrode assembly in which a first electrode, a first separator, a second electrode, and a second separator are sequentially stacked and wound, the method comprising:
(a) transferring the first electrode in a roll-to-roll manner;
(b) attaching a swelling tape on at least one surface of a slitting region of the first electrode; and
(c) slitting a longitudinal central portion of the slitting region,
such that a longitudinal central portion of the swelling tape matches the longitudinal central portion of the slitting region of the first electrode.

14. The method of claim 13, wherein a width of the swelling tape is 60% or greater and 100% or less based on 100% of a width of the first electrode.

15. The method of claim 13, wherein a length of the swelling tape is 500% or greater and 7000% or less based on 100% of a thickness of the first electrode.

16. The method of claim 13, wherein the first electrode is a positive electrode, and the second electrode is a negative electrode.

17. A jelly-roll type electrode assembly manufactured by the method of claim 13.

18. A secondary battery comprising:
the jelly-roll type electrode assembly of claim 1; and
a battery case for accommodating the jelly-roll type electrode assembly.

19. The secondary battery of claim 18, wherein the battery case is cylindrical.
